# EUROPÄISCHE PATENTSCHRIFT

(11) **EP 3 625 665 B1**
(45) Veröffentlichungstag und Bekanntmachung des Hinweises auf die Patenterteilung: **15.12.2021**
(21) Anmeldenummer: 18723464.6
(22) Anmeldetag: 07.05.2018
(51) Int. Cl.: G06F 3/0488, G06F 3/16

(54) **BARRIEREFREIE BEDIENUNG EINES HAUSGERÄTS**
ACCESSIBLE OPERATION OF A HOUSEHOLD APPLIANCE
COMMANDE D'UN APPAREIL MÉNAGER ACCESSIBLE

(30) Priorität: 17.05.2017 DE 102017208297
(43) Veröffentlichungstag der Anmeldung: 25.03.2020
(73) Patentinhaber: BSH Hausgeräte GmbH, 81739 München (DE)
(72) Erfinder: BIRK-BRAUN, Natalie, 71636 Ludwigsburg (DE); SCHÜNEMANN, Axel, 83358 Seebruck (DE)
(86) Internationale Anmeldenummer: PCT/EP2018/061646
(87) Internationale Veröffentlichungsnummer: WO 2018/210593

(56) Entgegenhaltungen:
- DE-A1- 10 329 613
- DE-A1-102007 060 007
- DE-A1-102010 063 083
- DE-A1-102013 226 362

## Beschreibung

Die Erfindung betrifft die Bedienung eines Hausgeräts. Insbesondere betrifft die Erfindung die barrierefreie Bedienung eines Hausgeräts durch eine Person mit reduzierter Sehkraft.

### Stand der Technik

Ein handelsübliches Hausgerät, beispielsweise eine Waschmaschine, ein Wäschetrockner oder eine Kaffeemaschine, ist in der Regel zur Bedienung durch eine normalsichtige Person eingerichtet. Durch die steigende Vielzahl möglicher Optionen und Bedienungsprogramme wird häufig ein berührungsempfindlicher Bildschirm (Touchscreen) für die Bedienung verwendet, sodass dynamisch Einträge, Menüs oder Animationen zur leichteren Bedienung dargestellt werden können.

Ein solches Bedienkonzept geht jedoch nicht auf Personen mit reduzierter Sehkraft ein, beispielsweise auf stark kurz- oder weitsichtige Personen oder Personen mit getrübtem Augenlicht.

EP 1 543 493 B1 betrifft eine Braille-Anzeige zur ertastbaren Darstellung von Zeichen. Das Braille-Alphabet beschreibt eine Anzahl Zeichen, die jeweils durch gesetzte oder nicht gesetzte tastbare Hervorhebungen in einer vorbestimmten Matrix definiert sind. Soll ein Text dargestellt werden, so ist üblicherweise eine große Vielzahl beweglicher Teile erforderlich, die aufwendig in der Herstellung und anfällig für mechanische Fehler sein können. DE 3 403 487 C2 schlägt vor, ein elektrisches Hausgerät mit einer Sprachausgabe auszurüsten. Eine Eingabeschnittstelle wird entsprechend angepasst, sodass die einzelnen Bedienelemente haptisch voneinander unterscheidbar sind. Die Funktionsvielfalt eines modernen Geräts kann auf diese Weise häufig nicht voll ausgeschöpft werden. Aus der DE 10 2007 060 007 A1 ist eine Bedienvorrichtung für ein Hausgerät mit einem Beschleunigungssensor vorbekannt. Die DE 103 29 613 A1 beschäftigt sich mit einem Hausgerät, das akustische Rückmeldungen geben kann. Die DE 10 2010 063 083 A1 offenbart ein Hausgerät mit einem Drehwähler.

Eine der vorliegenden Erfindung zugrunde liegende Aufgabe besteht darin, eine verbesserte Technik zur barrierefreien Bedienung eines Hausgeräts anzugeben. Die Erfindung löst diese Aufgabe mittels der Gegenstände der unabhängigen Ansprüche. Unteransprüche geben bevorzugte Ausführungsformen wieder.

Eine erfindungsgemäße Bedienvorrichtung für ein Hausgerät umfasst ein Eingabeelement; eine Schnittstelle zur Kommunikation mit dem Hausgerät; und eine Verarbeitungseinrichtung zur Steuerung des Hausgeräts in Abhängigkeit einer Betätigung des Eingabeelements. Dabei ist das Eingabeelement vorzugsweise für die Betätigung durch eine Person mit reduzierter Sehstärke eingerichtet.

Die Bedienvorrichtung kann sowohl zur Bedienung des Hausgeräts durch eine Person normaler Sehkraft wie auch eine Person mit verminderter Sehkraft verwendet werden. Die bedienende Person kann eine reduzierte Sehkraft aufweisen, beispielsweise nur noch weniger als 100%, weniger als 80% oder weniger als 50% auf einem Auge, oder vollständig blind sein. Die reduzierte Sehkraft kann situationsabhängig sein, beispielsweise wenn eine weitsichtige Person das Hausgerät im Nahbereich bedient. Außerdem kann die reduzierte Sehkraft auch altersbedingt oder vorübergehend sein. Als Nebeneffekt kann die Bedienung des Hausgeräts durch eine sehende oder sehbehinderte Person auch verbessert im Dunkeln ermöglicht sein. Das Hausgerät kann eine übliche, optische oder optisch unterstützte Benutzerschnittstelle für eine Person normaler Sehkraft umfassen und die Bedienvorrichtung kann bei Bedarf durch eine Person verminderter Sehkraft verwendet werden. Herstellungskosten des Hausgeräts können dadurch nicht oder nur wenig gesteigert sein. Die Bedienvorrichtung kann in das Hausgerät integriert oder separat von diesem realisiert sein. Die Bedienvorrichtung kann am Hausgerät gegen eine andere, ursprünglich vorgesehene Bedienvorrichtung ausgetauscht oder zusätzlich vorgesehen sein. Außerdem kann die Bedienvorrichtung am Hausgerät ursprünglich verbaut sein oder nachgerüstet werden.

Zur weiteren Ausgestaltung der Erfindung sind mehrere Varianten denkbar, die auch miteinander kombiniert werden können.

Die Bedienvorrichtung umfasst eine akustische Ausgabevorrichtung, wobei das Eingabeelement vorzugsweise einen berührungsempfindlichen Bildschirm zur Darstellung einer Funktionsfläche umfasst und die Verarbeitungseinrichtung insbesondere dazu eingerichtet sein kann, in Antwort auf eine Betätigung der Funktionsfläche einen akustischen Hinweis auf eine zugeordnete Funktion auszugeben.

Insbesondere eine nicht vollständig blinde Person kann die Funktionsfläche optisch erfassen und betätigen, sodass sie einen Hinweis auf die dadurch auszulösende Funktion erhält. Beispielsweise kann der Hinweis durch ein kurzes Antippen der Funktionsfläche abgerufen werden und das Auslösen der Funktion erfolgt erst, wenn die Funktionsfläche über eine längere Zeit oder mehrfach betätigt wird. In einer besonders bevorzugten Ausführungsform ist die Verarbeitungseinrichtung dazu eingerichtet, die Funktion erst dann auszulösen, wenn die zugeordnete Funktionsfläche um eine vorbestimmte Zeit länger betätigt wurde als die Ausgabe des akustischen Hinweises erfordert. Anders ausgedrückt kann durch das Berühren der Funktionsfläche der akustische Hinweis angefordert werden, und das Ausführen der Funktion erfolgt nur dann, wenn die Person die Betätigung der Funktionsfläche länger aufrechterhält als das Ausgeben des Hinweises in Anspruch nimmt.

Der akustische Hinweis kann einen gesprochenen Text, einen Signalton, eine Signalfolge oder eine Melodie umfassen. In einer weiteren Ausführungsform kann auch ein charakteristisches Geräusch auf die Funktion hinweisen. Das Geräusch kann insbesondere eine mit der Funktion verbundene Tätigkeit des Hausgeräts versinnbildlichen oder repräsentieren.

Erfindungsgemäß umfasst die Bedienvorrichtung eine akustische Ausgabevorrichtung, wobei das Eingabeelement ein mechanisches Stellelement umfasst, das mindestens eine ertastbare Endstellung und haptisch voneinander unterscheidbare Zwischenstellungen aufweist. Dabei ist die Verarbeitungseinrichtung dazu eingerichtet, für das Erreichen einer Zwischenstellung eine erste akustische Rückmeldung und für das Erreichen der Endstellung eine zweite akustische Rückmeldung auszugeben. Zusätzlich kann die Verarbeitungseinrichtung dazu eingerichtet sein, einen akustischen Hinweis auf eine zugeordnete Funktion der erreichten Stellung auszugeben.

Die akustische Rückmeldung kann, wie oben beschrieben wurde, unterschiedlich ausgeführt sein. In einer einfachen Ausführungsform werden nur zwei unterschiedliche akustische Rückmeldungen verwendet, wobei eine Bedienperson eine Position des mechanischen Stellelements durch Zählen erster akustischer Rückmeldungen beim Verstellen des Stellelements aus einer Endstellung heraus bestimmen kann. Diese Variante kann leicht auf unterschiedliche Anzahlen Zwischenstellungen angepasst werden. So kann insbesondere ein Menü, wahlweise auch ein hierarchisches Menü, auch durch eine Person mit reduzierter Sehstärke sicher benutzt werden.

Das mechanische Stellelement kann eine steuerbare Bremseinrichtung umfassen, wobei die Verarbeitungseinrichtung vorzugsweise dazu eingerichtet ist, die Bremseinrichtung derart anzusteuern, dass das Stellelement zwischen einer ersten und einer zweiten Endstellung eine vorbestimmte Anzahl Betätigungsschritte einnehmen kann. Dabei kann das Stellelement insbesondere drehbar zu betätigen sein, beispielsweise in Form eines Drehknopfs. Mittels der Bremseinrichtung kann eine Kraftrückmeldung auf eine Betätigung ausgegeben werden, sodass eine bedienende Person zusätzlich oder alternativ zur akustischen Rückmeldung eine haptische Rückmeldung über das Erreichen einer End- oder Zwischenstellung erhält.

In einigen Ausführungsformen ist die Bedienvorrichtung zur Auswahl und anschließenden Bedienung eines von mehreren unterschiedlichen Hausgeräten eingerichtet. Dabei können dedizierte Bedienelemente für die unterschiedlichen Hausgeräte vorgesehen sein oder eines der Bedienelemente kann für mehrere Hausgeräte verwendet werden. Besonders bevorzugt ist eine Ausführungsform, in der die Bedienvorrichtung möglichst universell für eine Vielzahl auch unterschiedlicher Hausgeräte eingesetzt werden kann. Eines oder mehrere Eingabeelemente, wie sie oben beschrieben wurden, werden dabei bevorzugt mittels einer Benutzeroberfläche so angesteuert und gegebenenfalls durch eine Ausgabe einer akustischen oder haptischen Einrichtung unterstützt, dass eine möglichst intuitive Bedienung aller unterstützten Hausgeräte möglich ist. Die Auswahl des zu bedienenden Hausgeräts kann beispielsweise mittels eines mechanischen Auswahlschalters erfolgen. Alternativ kann ein Hausgerät auch durch Annähern der Bedienvorrichtung in einen vorbestimmten Abstand zum Hausgerät ausgewählt werden. Andere Varianten sind ebenfalls denkbar.

In einer besonders bevorzugten Ausführungsform ist die Bedienvorrichtung zum autarken Betrieb und die Schnittstelle zur drahtlosen Kommunikation eingerichtet. Die Bedienvorrichtung kann beispielsweise ein eigenes Gehäuse und eine eigene Energieversorgung umfassen und mittels einer üblichen drahtlosen Technik wie WiMAX, WLAN, Bluetooth oder NFC mit dem Hausgerät kommunizieren. In einer weiteren Ausführungsform kommuniziert die Bedienvorrichtung mit einer zentralen Komponente, beispielsweise über ein allgemeines Informationsnetzwerk wie das Internet oder ein Mobilfunknetz, und die zentrale Komponente kommuniziert ihrerseits mit einem oder mehreren Hausgeräten. Die Hausgeräte können so mittels der zentralen Einrichtung gemeinsam verwaltet werden, sodass insbesondere Wechselwirkungen zwischen den Hausgeräten verbessert unterstützt werden können. Beispielsweise kann das Waschen von Wäsche nacheinander den Betrieb einer Waschmaschine und eines Wäschetrockners erfordern. Eine Benutzerführung kann auf derartige Sequenzen eingehen. Außerdem kann die zentrale Stelle verbessert erreichbar sein, wenn sich die Bedienvorrichtung nicht in der Nähe eines Hausgeräts befindet, beispielsweise weil der Benutzer mit der Bedienvorrichtung nicht zu Hause ist. Eine alternative Bedienung der Hausgeräte mittels eines anderen Zugangs zur zentralen Stelle kann ebenfalls angeboten werden.

In einigen Ausführungsformen umfasst das Eingabeelement ein mechanisches Stellelement, wobei die Verarbeitungseinrichtung vorzugsweise dazu eingerichtet ist, das Hausgerät in Antwort auf eine Betätigung des Eingabeelements in einen sicheren Zustand zu verbringen. Das Eingabeelement kann insbesondere in Form eines Pilztasters oder einer anderen leicht zu betätigenden Einrichtung ausgebildet sein. Bei Betätigen des Eingabeelements können ein oder mehrere Hausgeräte in einen Zustand versetzt werden, in dem eine Gefährdung durch das Gerät minimal ist. Beispielsweise kann ein Benutzer, bevor er seine Wohnung verlässt, eines oder mehrere seiner Hausgeräte jeweils in einen energiesparenden Zustand versetzen, um Strom zu sparen. Ein Hausgerät, das mit Wasser arbeitet, beispielsweise eine Kaffeemaschine oder eine Waschmaschine, kann dazu angesteuert werden, einen Frischwasserzulauf sicher zu verschließen. Im Fall der Waschmaschine kann ein Reinigungsbehälter von Wasser bzw. Lauge geleert werden.

Ein erfindungsgemäßes System umfasst ein Hausgerät und die oben beschriebene Bedienvorrichtung. Es können auch mehrere Hausgeräte und eventuell die oben erwähnte zentrale Komponente vom System umfasst sein.

Ein erfindungsgemäßes Verfahren zum Steuern eines Hausgeräts umfasst Schritte des Abtastens einer Betätigung eines Eingabeelements; des Ausgebens einer akustischen Rückmeldung über eine der Betätigung zugeordnete Funktion des Hausgeräts; und des Übermittelns einer Steuernachricht an das Hausgerät, um die Funktion auszulösen. Das Verfahren kann ganz oder teilweise auf einer Verarbeitungseinrichtung ablaufen und insbesondere als Computerprogramm vorliegen, wobei die Verarbeitungseinrichtung einen programmierbaren Mikrocomputer oder Mikrocontroller umfassen kann.

Die oben beschriebenen Merkmale der Bedienvorrichtung sind frei miteinander kombinierbar, so dass mit den Merkmalen auch andere Ausführungsformen gebildet werden können, ohne den Umfang der Erfindung zu verlassen. Zusätzlich sind die Merkmale und Vorteile der Bedienvorrichtung analog auf das erfindungsgemäße System und das erfindungsgemäße Verfahren anwendbar.

Die Erfindung wird nun unter Bezug auf die beiliegenden Figuren genauer beschrieben, in denen:
- Fig. 1: eine Ausführungsform eines Systems mit einer Bedienvorrichtung und mehre-ren Hausgeräten;
- Fig. 2: eine Bedienvorrichtung in einer weiteren Ausführungsform;
- Fig. 3: ein Ablaufdiagramm einer Ausführungsform eines Verfahrens zum Steuern ei-nes Hausgeräts; und
- Fig. 4: ein Ablaufdiagramm einer weiteren Ausführungsform eines Verfahrens zum Steuern eines Hausgeräts
darstellt.

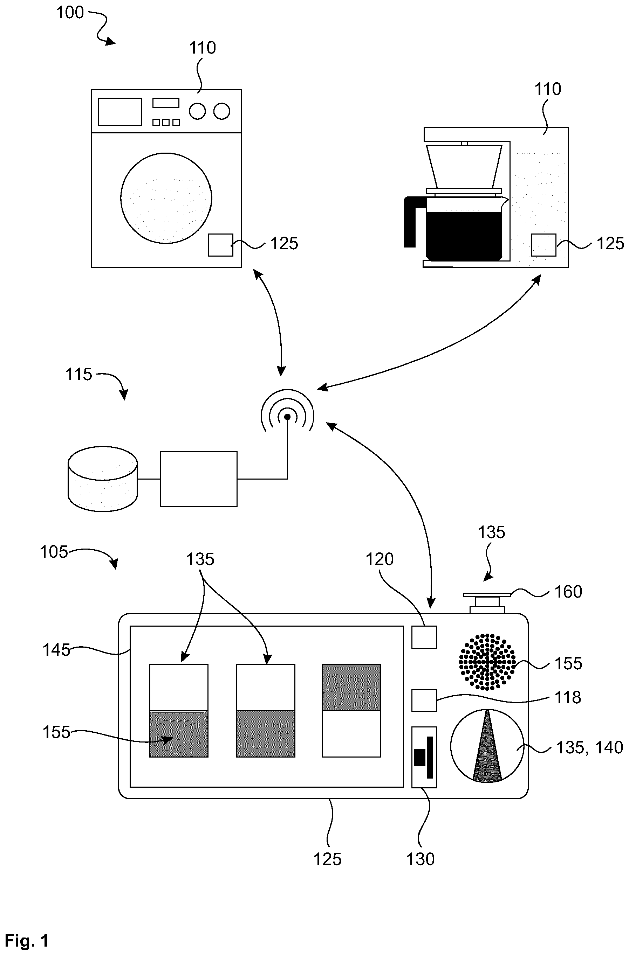

Figur 1 zeigt ein System 100, das eine Bedienvorrichtung 105, ein oder mehrere Hausgeräte 110 sowie optional eine zentrale Einrichtung 115 umfasst. Die Bedienvorrichtung 105 ist dazu eingerichtet, mit wenigstens einem der Hausgeräte 110 zu kommunizieren und seine Funktion zu steuern. Dazu können Informationen in einer oder in beiden Richtungen ausgetauscht werden. Gegebenenfalls gibt die Bedienvorrichtung 105 auch eine Ausgabe über einen Bedien- oder Betriebszustand eines Hausgeräts 110 aus. Die Bedienvorrichtung 105 umfasst eine Verarbeitungseinrichtung 118, die insbesondere als programmierbarer Mikrocomputer oder Mikrocontroller ausgebildet sein kann. Die Bedienvorrichtung 105 und die Hausgeräte 110 können jeweils eine Schnittstelle 120 aufweisen, die unabhängig voneinander drahtgebunden oder drahtlos ausgeführt sein können. Die Bedienvorrichtung 105 kann unmittelbar oder indirekt über die zentrale Einrichtung 115 mit einem Hausgerät 110 kommunizieren. Teile einer Kommunikationsverbindung zwischen der Bedienvorrichtung 105 und der zentralen Einrichtung 115 oder von dieser zu einem der Hausgeräte 110 können jeweils drahtgebunden oder drahtlos ausgeführt sein. Beispielsweise kann die Kommunikation zwischen der Bedienvorrichtung 105 und der zentralen Einrichtung 115 drahtlos mittels Bluetooth oder WLAN erfolgen, während die Kommunikation zwischen der zentralen Einrichtung 115 und einem Hausgerät 110 drahtgebunden über einen Teil des Internets und anschließend drahtlos, etwa über Bluetooth, erfolgen kann. Die zentrale Einrichtung 115 kann insbesondere als Verarbeitungseinrichtung ausgeführt sein, die über ein Kommunikationsnetzwerk wie das Internet oder ein Mobilfunknetz erreichbar ist. In einer Ausführungsform umfasst die zentrale Einrichtung 115 einen Server, der in einer weiteren Ausführungsform auch von seinem Aufstellungsort abstrahiert als Dienst oder Cloud realisiert sein kann.
Die Bedienvorrichtung 105 ist dazu eingerichtet, insbesondere einer Person mit verringerter Sehkraft die Bedienung des Hausgeräts 110 zu erleichtern oder zu ermöglichen. Rein exemplarisch sind an Hausgeräten 110 in Figur 1 im linken Bereich eine Waschmaschine 110 und im rechten Bereich eine Kaffeemaschine 110 dargestellt. Andere Hausgeräte 110 können ebenfalls gesteuert werden, beispielsweise ein Herd, ein Ofen, ein Toaster, ein autonomer Staubsauger und so weiter.

Die Bedienvorrichtung 105 ist bevorzugt zum autarken Betrieb eingerichtet und kann ein eigenes Gehäuse 125 sowie eine eigene Energieversorgung 130 umfassen. Die Bedienvorrichtung 105 kann separat gehandhabt werden oder, in einer weiteren Ausführungsform, in eines der Hausgeräte 110 integriert sein. Die Bedienvorrichtung 105 umfasst bevorzugt wenigstens ein Eingabeelement 135. In der dargestellten Ausführungsform ist ein erstes Eingabeelement 135 durch ein mechanisches Stellelement 140, hier einen Drehschalter, einen Drehknopf oder ein Drehrad gebildet. Ein korrespondierendes Schiebeelement kann ebenso verwendet werden. Das Stellelement 140 kann, wie unten noch genauer ausgeführt wird, mehrere haptisch voneinander unterscheidbare Stellungen aufweisen. Beispielsweise kann das Stellelement 140 dazu verwendet werden, eines der Hausgeräte 110 zur Bedienung durch die Bedienvorrichtung 105 auszuwählen. Die Stellung des Stellelements 140 kann ertastbar sein, indem der Drehknopf nicht radialsymmetrisch ausgeführt ist, sondern beispielsweise einen Zeiger, einen Knopf oder eine Nase aufweist, die ertastbar ist.

Ein weiteres Eingabeelement 135 ist in der dargestellten Ausführungsform durch einen berührungsempfindlichen Bildschirm (Touchscreen) 145 gebildet, auf dem eine Funktionsfläche 150 dargestellt ist. Die Funktionsfläche 150 ist bevorzugt groß, mit starkem optischem Kontrast und in ausreichendem Abstand zu einer benachbarten Funktionsfläche 150 dargestellt, um die Bedienung durch eine nur teilweise sehbehinderte Person, die zumindest noch grobe Strukturen optisch auflösen kann, zu erleichtern. Eine Funktion, die der Funktionsfläche 150 zugeordnet ist, kann durch Drücken oder Darüberstreichen am jeweiligen Hausgerät 110 ausgelöst werden.

Weiter bevorzugt ist eine akustische Ausgabevorrichtung 155 vorgesehen, die zur Ausgabe eines Tons, eines Geräuschs oder gesprochener Worte eingerichtet sein kann. Die Ausgabevorrichtung 155 kann dazu verwendet werden, einen Hinweis auf eine Funktion auszugeben, die einer Funktionsfläche 150 zugeordnet ist. Auch eine Position des Stellelements 140 kann durch einen akustischen Hinweis mittels der Ausgabevorrichtung 155 mitgeteilt werden. Das Stellelement 140 kann insbesondere eine Anzahl diskreter Stellungen aufweisen, deren Einnehmen jeweils durch eine entsprechende akustische Information begleitet werden kann. Dadurch kann insbesondere eine numerische Eingabe erleichtert werden, wenn beispielsweise die dritte Stellung des Stellelements 140, ausgehend von einer vorbestimmten Stellung, einzustellen ist.

Ein weiteres Eingabeelement 135, das vorliegend exemplarisch als Pilztaster 160 ausgeführt ist, kann dazu eingerichtet sein, eine Sicherheitsfunktion an einem oder mehreren Hausgeräten 110 auszulösen. Die Sicherheitsfunktion kann insbesondere das Hausgerät 110 in einen sicheren Zustand bringen. Dieser ist üblicherweise durch eine geringe Energieaufnahme und gegebenenfalls durch das Herstellen einer physischen Bedingung gekennzeichnet. Die Bedingung kann insbesondere die Stellungen eines oder mehrerer Aktoren des Hausgeräts 110 umfassen, um ein potentiell gefährliches Medium, mit dem das Hausgerät 110 arbeitet, beispielsweise eine Flüssigkeit, sicher zu verwahren. Durch Drücken des Pilztasters 160 können beispielsweise mehrere oder alle Hausgeräte 110 vor dem Verlassen eines gemeinsamen Haushalts gesichert werden. Eine Rückmeldung, welche Hausgeräte 110 erfolgreich in den sicheren Zustand gebracht wurden, kann mittels der Ausgabevorrichtung 155 dargeboten werden.

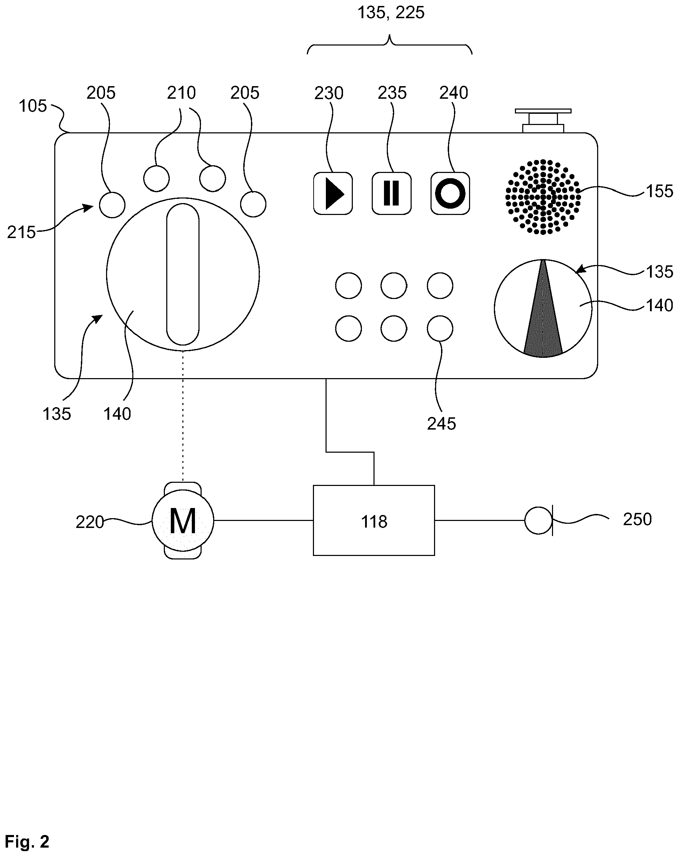

Figur 2 zeigt eine Bedienvorrichtung 105 in einer weiteren Ausführungsform, die mit der von Figur 1 kombinierbar sein kann. Die dargestellte Bedienvorrichtung 105 weist anstelle des Touchscreens 145 beispielhaft ein weiteres drehbares Stellelement 140 auf. Das Stellelement 140 kann in eine von mehreren vorbestimmten Stellungen gebracht werden, wobei vorliegend exemplarisch eine erste und eine zweite Endstellung 205 und mehrere dazwischenliegende Zwischenstellungen 210 vorgesehen sind. Das Einnehmen einer der Stellungen 205, 210 kann mittels einer zugeordneten Anzeigeeinrichtung 215 angezeigt werden. Die Anzeigeeinrichtung 215 kann beispielsweise eine Lampe oder eine LED umfassen. Es ist weiter bevorzugt, dass das Stellelement 140 dazu eingerichtet ist, selbsttätig an den Stellungen 205, 210 mechanisch einzurasten, sodass eine haptische Rückmeldung über das Erreichen einer der Stellungen 205, 210 vermittelt werden kann. In einer Ausführungsform ist hierzu ein mechanischer, insbesondere federbelasteter Rastmechanismus vorgesehen.

In einer anderen Ausführungsform ist eine Bremseinrichtung 220 mechanisch mit dem Stellelement 140 gekoppelt und die Verarbeitungseinrichtung 118 ist dazu eingerichtet, die Bremseinrichtung 220 so zu steuern, dass sich ein ähnlicher Rasteffekt ergibt. Die Bremseinrichtung 220 kann beispielsweise eine mechanische Reibungsbremse oder einen Elektromotor, insbesondere einen Schrittmotor, umfassen. Die Bremseinrichtung 220 kann dazu eingerichtet sein, ein Bewegen über eine der Endstellungen 205 hinaus durch eine verstärkte Bremskraft anzuzeigen oder zu verhindern. Mittels der Bremseinrichtung 220 können je nach Bedienkontext unterschiedliche Anzahlen Stellungen 205, 210 des Stellelements 140 realisiert werden. Dadurch kann beispielsweise ein hierarchisches Menü mittels des Stellelements 140 durchlaufen oder eine Auswahl aus einer vorbestimmten Menge Optionen angeboten werden. Ein auszuwählender Menüeintrag kann beispielsweise durch Drücken des Stellelements 140 oder eines anderen Eingabeelements 135 erfolgen. Bevorzugt ist die Stellung des Stellelements 140 auch tastbar, beispielsweise durch das in Fig. 1 angedeutete, senkrecht stehende Griffelement, einen Richtungspfeil, einen Zeiger oder eine Nase. In einer Ausführungsform kann die Bremseinrichtung 220 in Form des Elektromotors auch dazu verwendet werden, das Stellelement 140 anzutreiben.

Beispielsweise kann beim Eintreten in eine Auswahl von n Elementen das Stellelement 140 automatisch in eine erste (oder letzte) Stellung 205, 210 gebracht werden, bevor ein Benutzer eine andere Stellung einstellt.

Einen Hinweis auf eine eingenommene Stellung 205, 210 kann auch über die akustische Ausgabevorrichtung 155 ausgegeben werden. Beispielsweise kann eine erste akustische Rückmeldung, etwa in Form eines tiefen Tons, beim Erreichen einer Endstellung 205, und eine zweite akustische Rückmeldung, etwa in Form eines hohen Tons, beim Erreichen einer Zwischenstellung 210 ausgegeben werden. Ein Benutzer, der weiß, dass beispielsweise von einer eingenommenen Endstellung 205 die dritte Stellung 205, 210 im Uhrzeigersinn einzustellen ist, kann das Stellelement 140 so lange in der vorgesehenen Richtung drehen, bis er drei akustische Rückmeldungen erhalten hat. Die ersten und zweiten Rückmeldungen können sich noch weiter voneinander unterscheiden, beispielsweise auch bezüglich einer Lautstärke oder einer Länge. Zusätzlich oder alternativ kann über die akustische Ausgabevorrichtung 155 ein Hinweis auf eine gewählte Stellung 205, 210 bzw. eine mit ihr verknüpfte Funktion eines Hausgeräts 110 ausgegeben werden.

In einer Ausführungsform ist kein mechanischer Endanschlag für das Stellelement 140 vorgesehen. Die Information, dass eine vorgesehene Endstellung 210 erreicht ist, kann lediglich durch die akustische Rückmeldung an einen Benutzer übermittelt werden. Beispielsweise kann der Benutzer das Stellelement 140 aus der ersten Endstellung 205 durch Drehen in einer Richtung zuerst in eine oder nacheinander mehrere Zwischenstellungen 210 und schließlich in die zweite Endstellung 205 verbringen. Das Erreichen jeder Zwischenstellung 205 und der zweiten Endstellung 210 wird bevorzugt akustisch signalisiert. Ein Weiterdrehen des Stellelements 140 in die gleiche Richtung kann mechanisch möglich sein, wobei sich ein durch das Stellelement 140 eingestellter bzw. ausgewählter Wert aber nicht mehr weiter verändern kann. Ein ausgewähltes Element einer Liste oder ein eingestellter Parameter, etwa eine Waschtemperatur einer Waschmaschine, können auf dem zuletzt gewählten Wert bleiben. Beim Weiterdrehen des Stellelements 140 können wiederholt akustische Signale ausgegeben werden, die auf die bereits erreichte Endstellung 210 hinweisen. Nach einem beliebigen Drehweg über die Endstellung 210 hinaus kann durch Drehen um eine Stellung 205, 210 in die entgegengesetzte Richtung unmittelbar eine Zwischenstellung 205 oder die andere Endstellung 210 erreicht werden.

Die dargestellte Bedienvorrichtung 105 umfasst zusätzlich eine Anzahl weiterer Eingabeelemente 135 in Form von Knöpfen oder Tasten 225. Im oberen Bereich der Darstellung von Fig. 2 sind drei speziell geformte Tasten 225 angeordnet, die jeweils einem vorbestimmten, festen Zweck zugeordnet sein können und jeweils eine tastbare Markierung an ihrer Oberseite tragen, die auf die Funktion hinweist. Eine erste solche Taste 230 ist beispielsweise einer Start-Funktion, eine zweite Taste 235 einer Pausen-Funktion, und eine dritte Taste 240 einer Stopp-Funktion zugeordnet. Die dargestellten, tastbaren Symbole auf den Tasten 230 bis 240 sind rein beispielhaft und können auch beliebig anders ausgeführt werden. Mittels der Starttaste 230 kann ein Hausgerät 110 gesteuert werden, eine Funktion oder einen Ablauf zu beginnen, mittels der Pausentaste 235 kann der Betrieb des Hausgeräts 110 unterbrochen und später wieder aufgenommen werden, und mittels der Stopptaste 240 kann die Funktion oder Aufgabe des Hausgeräts 110 abgebrochen werden. Andere Funktionen beziehungsweise Zuordnungen sind ebenfalls möglich.

Weiter sind in der dargestellten Ausführungsform zusätzliche Eingabeelemente 135 in Form von Knöpfen oder Schaltern 245 dargestellt. In einer Ausführungsform kann einer der Knöpfe 245 mit einer wählbaren Funktion eines Hausgeräts 110 verknüpft werden, sodass das Drücken des Knopfes 245 die Funktion auslöst. Die Zuordnung kann auch dynamisch sein, indem beispielsweise ein Knopf 245 im Kontext unterschiedlicher Hausgeräte 110 unterschiedliche Funktionen auslösen kann.

Optional kann auch eine akustische Eingabevorrichtung 250 vorgesehen sein. Darüber kann insbesondere eine akustische Eingabe eines Benutzers erfolgen. Diese Eingabe kann einer Funktion eines Hausgeräts 110 zugeordnet sein. Die Verarbeitungseinrichtung 118 kann hierfür eine Spracherkennung durchführen. Ein eingegebener Sprachbefehl kann auch an die zentrale Einrichtung 115 übermittelt und dort analysiert werden. Das Ergebnis der Analyse kann unmittelbar zu einer Steuerung eines Hausgeräts 110 führen oder an die Bedienvorrichtung 105 zurückgegeben werden, um dort weiterverarbeitet oder ausgegeben werden zu können.

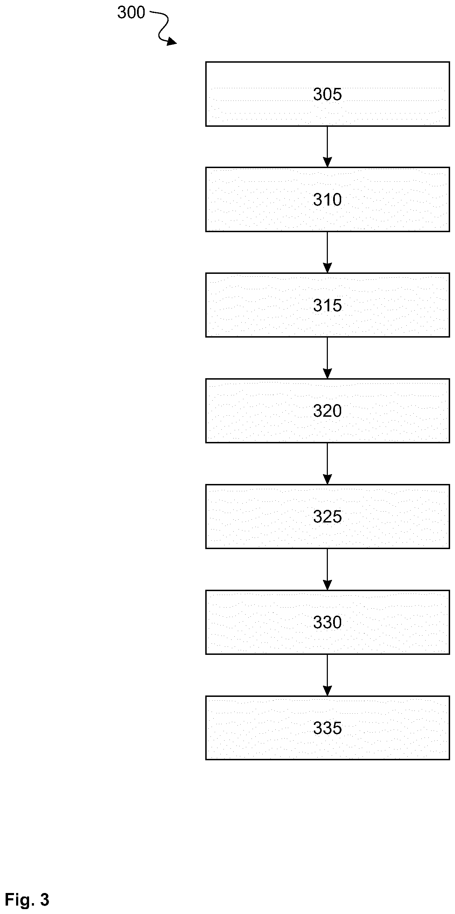

Figur 3 zeigt ein Ablaufdiagramm eines Verfahrens 300 zum Steuern eines Hausgeräts 110. Das Verfahren 300 ist insbesondere zum Ablaufen auf der Bedienvorrichtung 105 und noch genauer auf der Verarbeitungseinrichtung 118 eingerichtet und kann als Computerprogrammprodukt vorliegen.

Das dargestellte Verfahren 300 geht von einer Bedienvorrichtung 105 mit berührungsempfindlichem Bildschirm 145 aus, wie es in Figur 1 dargestellt ist.

In einem optionalen ersten Schritt 305 kann eines von mehreren Hausgeräten 110 ausgewählt werden. Dazu kann insbesondere ein Stellelement 140 verwendet werden, dessen Position eine unmittelbare haptische Rückmeldung unterstützt. Auf dem berührungsempfindlichen Bildschirm 145 werden dann eine oder mehrere Funktionsflächen 150 dargestellt. Das Betätigen einer Funktionsfläche 150 erfolgt durch Berühren in einem Schritt 310. Daraufhin wird in einem Schritt 315 ein Hinweis auf die der Funktionsfläche 150 zugeordnete Funktion des ausgewählten Hausgeräts 110 ausgegeben. Dies kann insbesondere als akustische, vorzugsweise gesprochene Textnachricht mittels der akustischen Ausgabevorrichtung 155 erfolgen.

Erfolgt die Betätigung der Funktionsfläche 150 über die gesamte Ausgabedauer des Hinweises und gegebenenfalls noch eine weitere, vorbestimmte Zeit, so wird in einem Schritt 320 die zugeordnete Funktion ausgewählt. In einem Schritt 325 wird eine entsprechende Anforderung zur Durchführung der Funktion an das Hausgerät 110 übermittelt. Gegebenenfalls kann in einem Schritt 330 eine Rückmeldung des Hausgeräts 110 empfangen und in einem Schritt 335 ausgegeben werden.

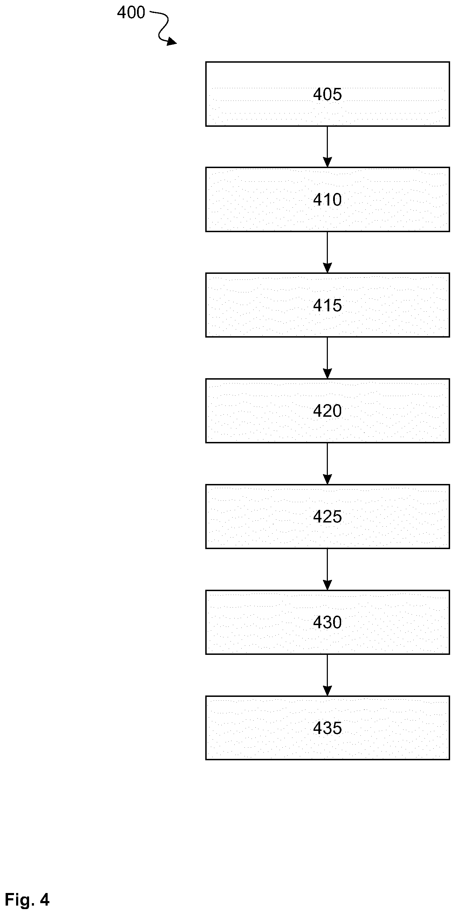

Figur 4 zeigt ein weiteres Verfahren 400 zur barrierefreien Steuerung eines Hausgeräts 110 mittels einer Bedienvorrichtung 105. Dabei wird von einer Ausführungsform mit einem Stellelement 140 ausgegangen, das mittels einer Bremseinrichtung 220 beeinflusst werden kann, wie oben mit Bezug auf Figur 2 genauer ausgeführt ist.

In einem ersten Schritt 405 kann eines von mehreren Hausgeräten 110 ausgewählt werden, wie oben mit Bezug auf Schritt 305 des Verfahrens 300 ausgeführt ist.

In einem Schritt 410 wird eine Anzahl Stellungen 205, 210 bestimmt, die in einem vorliegenden Bedienungsschritt für das Hausgerät 110 zur Auswahl stehen. Bevorzugt sind wenigstens zwei Endstellungen 205 vorgesehen, zwischen denen eine oder mehrere Zwischenstellungen 210 liegen können. Falls die Bremseinrichtung 220 dazu eingerichtet ist, die Stellung des Stellelements 140 aktiv zu beeinflussen, so kann das Stellelement 140 auch in eine vorbestimmte Stellung 205, 210 bewegt werden. Diese Stellung kann insbesondere eine der Endstellungen 205 umfassen.

In einem Schritt 415 wird die Position des Stellelements 140 erfasst und die Bremseinrichtung 220 wird derart angesteuert, dass sich ein Rasteffekt an den vorbestimmten Stellungen 205, 210 ergibt. Bevorzugt wird jedes Mal beim Einnehmen einer der Stellungen 205, 210 eine zugeordnete, akustische Rückmeldung mittels der akustischen Ausgabevorrichtung 155 ausgegeben. Die Rückmeldung ist bevorzugt so gewählt, dass eine Bedienperson eine Anzahl Rückmeldungen bei der Betätigung des Stellelements 140 zählen kann, um eine numerisch indizierte Stellung 205, 210 zu identifizieren. Eine Betätigung des Stellelements 140 über eine der Endstellungen 205 hinaus wird bevorzugt mittels der Bremseinrichtung 220 verhindert. Zusätzlich kann eine akustische Warnung ausgegeben werden.

Die nachfolgenden Schritte 420 bis 435 entsprechen den Funktionen 320 bis 335 des Verfahrens 300.

Die mit Bezug auf die Figuren gemachten Erläuterungen sind rein illustrativ und nicht beschränkend zu verstehen.

### Bezugszeichen

- 100: System
- 105: Bedienvorrichtung
- 110: Hausgerät
- 115: zentrale Einrichtung
- 118: Verarbeitungseinrichtung
- 120: Schnittstelle
- 125: Gehäuse
- 130: Energieversorgung
- 135: Eingabeelement
- 140: Stellelement
- 145: berührungsempfindlicher Bildschirm (Touchscreen)
- 150: Funktionsfläche
- 155: akustische Ausgabevorrichtung
- 160: Pilztaster
- 205: Endstellung
- 210: Zwischenstellung
- 215: Anzeigeeinrichtung
- 220: Bremseinrichtung
- 225: Taste
- 230: Starttaste
- 235: Pausentaste
- 240: Stopptaste
- 245: Knopf
- 250: Mikrofon
- 300: Verfahren
- 305: Auswählen Hausgerät
- 310: Berühren Funktionsfläche
- 315: Ausgeben Hinweis
- 320: Auswählen Funktion
- 325: Übermitteln Anforderung
- 330: Empfangen Rückmeldung
- 335: Ausgeben Hinweis auf Rückmeldung
- 400: Verfahren
- 405: Auswählen Hausgerät
- 410: Bestimmen Anzahl Stellungen. Opt.: Bringen des Stellelements in vorbestimmte Stellung
- 415: Erfassen Stellung, Ansteuern Bremseinrichtung und Ausgeben Rückmeldung
- 420: Auswählen Funktion
- 425: Übermitteln Anforderung
- 430: Empfangen Rückmeldung
- 435: Ausgeben Hinweis auf Rückmeldung

## Patentansprüche

1. Bedienvorrichtung (105) für ein Hausgerät (110), wobei die Bedienvorrichtung (105) folgendes umfasst:
- ein Eingabeelement (135);
- eine akustische Ausgabevorrichtung (155);
- eine Schnittstelle (120) zur Kommunikation mit dem Hausgerät (110);
- eine Verarbeitungseinrichtung (118) zur Steuerung des Hausgeräts (110) in Abhängigkeit einer Betätigung des Eingabeelements (135),
**dadurch gekennzeichnet, dass**
- das Eingabeelement (135) für die Betätigung durch eine Person mit reduzierter Sehstärke eingerichtet ist, indem das Eingabeelement (135) ein mechanisches Stellelement (140) umfasst, das mindestens eine ertastbare Endstellung (205) und haptisch voneinander unterscheidbare Zwischenstellungen (210) aufweist,
- wobei die Verarbeitungseinrichtung (118) dazu eingerichtet ist, für das Erreichen einer Zwischenstellung (210) eine erste akustische Rückmeldung und für das Erreichen der Endstellung (205) eine zweite akustische Rückmeldung auszugeben.

2. Bedienvorrichtung (105) nach dem vorangehenden Anspruch, wobei das Eingabeelement (135) einen berührempfindlichen Bildschirm (145) zur Darstellung einer Funktionsfläche (150) umfasst und die Verarbeitungseinrichtung (118) dazu eingerichtet ist, in Antwort auf eine Betätigung der Funktionsfläche (150) einen akustischen Hinweis auf eine zugeordnete Funktion auszugeben.

3. Bedienvorrichtung (105) nach Anspruch 2, wobei die Verarbeitungseinrichtung (118) dazu eingerichtet ist, die Funktion erst dann auszulösen, wenn die zugeordnete Funktionsfläche (150) um eine vorbestimmte Zeit länger betätigt wurde als die Ausgabe des akustischen Hinweises erfordert.

4. Bedienvorrichtung (105) nach einem der vorangehenden Ansprüche, wobei das Stellelement (140) eine steuerbare Bremseinrichtung (220) umfasst und die Verarbeitungseinrichtung (118) dazu eingerichtet ist, die Bremseinrichtung (220) derart anzusteuern, dass das Stellelement (140) zwischen einer ersten und einer zweiten Endstellung (205) eine vorbestimmte Anzahl Betätigungsschritte einnehmen kann.

5. Bedienvorrichtung (105) nach einem der vorangehenden Ansprüche, wobei die Bedienvorrichtung (105) zur Auswahl und anschließenden Bedienung eines von mehreren unterschiedlichen Hausgeräten (110) eingerichtet ist.

6. Bedienvorrichtung (105) nach einem der vorangehenden Ansprüche, wobei die Bedienvorrichtung (105) zum autarken Betrieb und die Schnittstelle (120) zur drahtlosen Kommunikation eingerichtet ist.

7. Bedienvorrichtung (105) nach einem der vorangehenden Ansprüche, wobei die Verarbeitungseinrichtung (118) dazu eingerichtet ist, das Hausgerät (110) in Antwort auf eine Betätigung des Eingabeelements (135) in einen sicheren Zustand zu verbringen, indem das Hausgerät in einen energiesparenden Zustand versetzt, ein Frischwasserzulauf zum Hausgerät sicher verschlossen und/oder ein Reinigungsbehälter des Hausgeräts von Wasser oder Lauge geleert wird.

8. System (100), umfassend ein Hausgerät (110) und eine Bedienvorrichtung (105) nach einem der vorangehenden Ansprüche.

9. Verfahren (300, 400) zum Steuern eines Hausgeräts (110), wobei das Verfahren (300, 400) folgende Schritte umfasst:
- Abtasten (410, 415) einer Betätigung eines Eingabeelements (135), das ein mechanisches Stellelement (140) umfasst, das mindestens eine ertastbare Endstellung (205) und haptisch voneinander unterscheidbare Zwischenstellungen (210) aufweist;
- Ausgeben (315, 415) einer akustischen Rückmeldung über eine der Betätigung zugeordnete Funktion des Hausgeräts (110), wobei für das Erreichen einer Zwischenstellung (210) eine erste akustische Rückmeldung und für das Erreichen der Endstellung (205) eine zweite akustische Rückmeldung ausgegeben wird; und
- Übermitteln (325, 425) einer Steuernachricht an das Hausgerät (110), um die Funktion auszulösen.

## Claims

1. Operating device (105) for a household appliance (110), wherein the operating device (105) comprises the following:
- an input element (135);
- an acoustic output device (155);
- an interface (120) for communication with the household appliance (110);
- a processing facility (118) for controlling the household appliance (110) as a function of actuation of the input element (135),
**characterised in that**
- the input element (135) is designed for actuation by a visually impaired person, by the input element (135) comprising a mechanical actuator (140), which has at least one tactile end position (205) and intermediate positions (210) which can be distinguished from one another haptically,
- wherein the processing facility (118) is designed to output a first acoustic feedback for reaching an intermediate position (210) and a second acoustic feedback for reaching the end position (205).

2. Operating device (105) according to the preceding claim, wherein the input element (135) comprises a touch-sensitive monitor (145) for presenting a functional surface (150), and the processing facility (118) is designed to output an acoustic notification of an assigned function in response to an actuation of the functional surface (150).

3. Operating device (105) according to claim 2, wherein the processing facility (118) is designed only then to trigger the function if the assigned functional surface (150) has been actuated for a longer predetermined time than the outputting of the acoustic notification requires.

4. Operating device (105) according to one of the preceding claims,
wherein the actuator (140) comprises a controllable braking facility (220) and the processing facility (118) is designed to actuate the braking facility (220) such that the actuator (140) can assume a predetermined number of actuation steps between a first and a second end position (205).

5. Operating device (105) according to one of the preceding claims, wherein the operating device (105) is designed to select and then operate one of several different household appliances (110).

6. Operating device (105) according to one of the preceding claims, wherein the operating device (105) is designed for autonomous operation and the interface (120) for wireless communication.

7. Operating device (105) according to one of the preceding claims, wherein the processing facility (118) is designed to bring the household appliance (110) into a safe state in response to actuation of the input element (135), by the household appliance being moved into an energy-saving state, a fresh water inlet to the household appliance being securely closed and/or a cleaning container of the household appliance being emptied of water or washing liquor.

8. System (100), comprising a household appliance (110) and an operating device (105) according to one of the preceding claims.

9. Method (300, 400) for controlling a household appliance (110), wherein the method (300, 400) comprises the following steps:
- scanning (410, 415) an actuation of an input element (135) which comprises a mechanical actuator (140), which has at least one tactile end position (205) and intermediate positions (210) which can be distinguished from one another haptically,
- outputting (315, 415) an acoustic feedback by way of a function of the household appliance (110) assigned to the actuation, wherein a first acoustic feedback is output for achieving an intermediate position (201) and a second acoustic feedback is output for achieving the end position (205); and
- transmitting (325, 425) a control message to the household appliance (110) in order to trigger the function.

## Revendications

1. Appareil de commande (105) pour un appareil ménager (110), dans lequel l'appareil de commande (105) comprend:
- un élément d'entrée (135) ;
- un élément acoustique de sortie (155) :
- une interface (120) pour la communication avec l'appareil ménager (110) ;
- un dispositif de traitement (118) pour le contrôle de l'appareil ménager (110) en fonction de l'actionnement d'un élément d'entrée (135),
**caractérisé en ce que**
- l'élément d'entrée (135) est prévu pour l'actionnement par une personne ayant une capacité de vision réduite **en ce que** l'élément d'entrée (135) comprend un élément de réglage mécanique (140) qui comprend au moins une position finale (205) qui se laisse trouver par tâtonnement et des positions intermédiaires (210) qui se distinguent l'une de l'autre à leur toucher,
- le dispositif de traitement (118) étant prévu pour émettre, pour la mise en position intermédiaire (210), un premier signal acoustique de retour et pour la mise en position finale (205), un deuxième signal acoustique de retour.

2. Appareil de commande (105) selon la revendication précédente, dans lequel l'élément d'entrée (135) comprend un écran tactile (145) pour afficher une surface de fonctionnalités (150) et le dispositif de traitement (118) est prévu pour émettre, en réponse à l'actionnement de la surface de fonctionnalités (150), un avertissement acoustique pour une fonction subordonnée.

3. Appareil de commande (105) selon la revendication 2, dans lequel le dispositif de traitement (118) est prévu pour ne déclencher la fonction que quand la surface de fonctionnalités (150) subordonnée est actionnée pendant une durée prédéterminée plus longue que ce qu'exige l'émission de l'avertissement acoustique.

4. Appareil de commande (105) selon l'une des revendications précédentes, dans lequel l'élément de réglage (140) comprend un appareil de freinage (220) contrôlable et le dispositif de traitement (118) est prévu pour amorcer le dispositif de freinage (220) de telle sorte que l'élément de réglage (140) peut, entre une première et une deuxième position finale (205), entreprendre un nombre prédéterminé d'étapes d'actionnement.

5. Appareil de commande (105) selon l'une des revendications précédentes, dans lequel l'appareil de commande (105) est prévu pour sélectionner et commander ensuite l'un parmi plusieurs appareils ménagers (110) différents.

6. Appareil de commande (105) selon l'une des revendications précédentes, dans lequel l'appareil de commande (105) est prévu pour un fonctionnement autonome et
l'interface (120), pour une communication sans fil.

7. Appareil de commande (105) selon l'une des revendications précédentes, dans lequel le dispositif de traitement (118) est prévu pour amener l'appareil ménager (110) dans un état sécurisé en réponse à l'actionnement de l'élément d'entrée (135), en mettant l'appareil ménager dans un état d'économie d'énergie, en fermant bien une arrivé d'eau douce vers l'appareil ménager et/ou en vidant le récipient de nettoyage de l'appareil ménager de son eau ou de sa lessive.

8. Système (100) comprenant un appareil ménager (110) et un appareil de commande (105) selon l'une des revendications précédentes.

9. Procédé (300, 400) de contrôle d'un appareil ménager (110), dans lequel le procédé (300, 400) comprend les étapes suivantes :
- actionnement après repérage par tâtonnement (410, 415) d'un élément d'entrée (135) comprenant un élément de réglage mécanique (140) qui comprend au moins une position finale (205) qui se laisse trouver par tâtonnement et des positions intermédiaires (210) qui se distinguent l'une de l'autre à leur toucher,
- émission (315, 415) d'un signal acoustique de retour par une fonction de l'appareil ménager (110) qui est subordonnée à l'actionnement, dans lequel, pour la mise en position intermédiaire (210), un premier signal acoustique de retour et pour la mise en position finale (205), un deuxième signal acoustique de retour sont émis : et
- transmission (325, 425) d'un message de contrôle à l'appareil ménager (110), pour déclencher la fonction.
